# EUROPÄISCHE PATENTANMELDUNG

(11) **EP 1 744 012 A2**
(43) Veröffentlichungstag der Anmeldung: **17.01.2007**
(21) Anmeldenummer: 06115948.9
(22) Anmeldetag: 23.06.2006
(51) Int. Cl.: F01D 5/30, F01D 5/34, F01D 5/00

(54) **Rotor, Verfahren zur Herstellung sowie Reparatur eines Rotors**

(30) Priorität: 14.07.2005 DE 102005034435
(71) Anmelder: Deutsches Zentrum für Luft- und Raumfahrt e.V., 51147 Köln (DE)
(72) Erfinder: Kocian, Frank, 48165, Münster (DE); Plevnik, Vid, 71272, Renningen Malmsheim (DE)
(74) Vertreter: Hoeger, Stellrecht & Partner Patentanwälte

(57) **Zusammenfassung**

Rotor mit einer Nabe und an der Nabe angeordneten Schaufelblättern, welcher sich in einer Axialrichtung erstreckt, wobei die Axialrichtung koaxial zu einer Rotordrehachse ist, mit einer Zusammensetzung aus in Axialrichtung aufeinanderfolgenden Rotorelementen, wobei benachbarte Rotorelemente miteinander verbunden sind, die Rotorelemente einen Nabenbereich oder einen Nabenbereich und Schaufelblattbereiche aufweisen und die Kombination der Nabenbereiche und Schaufelblattbereiche der Rotorelemente die Nabe und die Schaufelblätter bilden und wobei ein Rotorelement einen oder mehrere Verstärkungsbereiche aufweist und ein Verstärkungsbereich sich von einem Schaufelblattbereich in einen Nabenbereich erstreckt und/oder im Nabenbereich angeordnet ist.

## Beschreibung

Die Erfindung betrifft einen Rotor mit einer Nabe und an der Nabe angeordneten Schaufelblättern, welcher sich in einer Axialrichtung erstreckt, wobei die Axialrichtung koaxial zu einer Rotordrehachse ist, und welcher durch eine Zusammensetzung aus in Axialrichtung aufeinanderfolgenden Rotorelementen gebildet ist, wobei benachbarte Rotorelemente miteinander verbunden sind und die Rotorelemente einen Nabenbereich oder einen Nabenbereich und Schaufelblattbereiche aufweisen und die Kombination der Nabenbereiche und Schaufelblattbereiche der Rotorelemente die Nabe und die Schaufelblätter bilden.

Die Erfindung betrifft ferner ein Verfahren zur Herstellung des Rotors, bei dem getrennte Rotorelemente mit einem Nabenbereich oder einem Nabenbereich und Schaufelblattbereichen hergestellt werden und die Rotorelemente in einer Axialrichtung zu einem Stapelverbund gefügt werden.

Weiterhin betrifft die Erfindung ein Verfahren zur Reparatur eines Rotors mit einer Nabe und an der Nabe angeordneten Schaufelblättern, welcher sich in einer Axialrichtung erstreckt, wobei die Axialrichtung koaxial zu einer Rotordrehachse ist, und der Rotor aus in Axialrichtung aufeinanderfolgenden Rotorelementen zusammengesetzt ist, wobei benachbarte Rotorelemente miteinander verbunden sind und die Rotorelemente einen Nabenbereich oder einen Nabenbereich und Schaufelblattbereiche aufweisen und die Kombination der Nabenbereiche und Schaufelblattbereiche der Rotorelemente die Nabe und die Schaufelblätter bilden.

Aus dem Stand der Technik ist es bekannt, einen Rotor mit Nabe und Schaufelblättern durch Herausfräsen aus einem kompletten Block herzustellen.

Es ist auch bekannt, die Schaufelblätter und die Nabe getrennt herzustellen, wobei dann die Schaufelblätter an der Nabe aufgeschweißt werden.

Aus der DE 1 245 218 ist ein Gasturbinenrotor aus in axialer Richtung zusammengeschichteten Platten bekannt, zwischen denen radial verlaufende, als Nuten ausgebildete Kanäle vorgesehen sind, durch die ein über die hohle Rotorwelle zugeführtes Kühlmittel nach außen strömt, wobei die Schaufeln des Rotors durch einstückig mit den Platten hergestellte Ansätze gebildet werden und sich die radialen Kanäle in ihrem äußeren Bereich in Teilkanäle verzweigen, die an verschiedenen Stellen der Schaufelprofilfläche ausmünden.

Aus der EP 1 396 608 A2 ist ein Rotor mit Schaufelblättern für ein Gasturbinentriebwerk bekannt, welcher eine Mehrzahl von Schaufelblattpaaren umfasst, wobei jedes Paar einen Holm aufweist, welcher sich von einer ersten Spitze eines ersten Schaufelblatts zu einer zweiten Spitze eines zweiten Schaufelblatts erstreckt.

Der Erfindung liegt die Aufgabe zugrunde, einen Rotor der eingangs genannten Art bereitzustellen, welcher sich auf einfache Weise mit optimierter Anbindung der Schaufelblätter an die Nabe herstellen lässt.

Diese Aufgabe wird bei dem eingangs genannten Rotor erfindungsgemäß dadurch gelöst, dass ein Rotorelement einen oder mehrere Verstärkungsbereiche aufweist und dass ein Verstärkungsbereich sich von einem Schaufelblattbereich in einen Nabenbereich erstreckt und/oder in einem Nabenbereich angeordnet ist.

Die Rotorelemente lassen sich getrennt herstellen und optimieren. Beispielsweise lassen sich gezielt Verstärkungsbereiche mit definierter Verstärkungsrichtung in die Rotorelemente integrieren. In einem Rotorelement erfolgt im wesentlichen keine Kraftflussunterbrechung.

Die Fügung benachbarter Rotorelemente erfolgt über Verbindungsflächen, die eine sehr geringe Belastung erfahren. Diese liegen insbesondere senkrecht zur Axialrichtung (und damit zur Rotordrehachse). Durch die Fügung wird die Betriebsfestigkeit nicht wesentlich beeinträchtigt.

Der Rotor ist aus scheibenförmigen Elementen (nämlich den Rotorelementen) zusammengesetzt, wobei in diese scheibenförmigen Elemente über die Schaufelblattbereiche der entsprechende Schaufelblattanteil bereits integriert ist. Dadurch ist eine Fixierung eines ganzen Schaufelblatts an der Nabe nicht notwendig.

Da die einzelnen Rotorelemente individuell herstellbar sind, lassen sich beispielsweise auch Ausnehmungen einbringen, über die sich Hohlräume in dem Rotor bilden lassen. Dadurch lässt sich dessen Masse verringern und die Massenverteilung definiert einstellen. Über die Einbringung von Ausnehmungen lassen sich auch gezielt Kanäle ausbilden, um beispielsweise eine Ausblasung oder Absaugung an dem Rotor erreichen zu können.

Ein Rotorelement lässt sich auch aus unterschiedlichen Materialien herstellen. Beispielsweise werden höher belastete Bereiche aus einem Material höherer Festigkeit hergestellt.

Mit der erfindungsgemäßen Lösung lässt sich ein monolithischer Rotor bereitstellen, welcher nicht aus einem monolithischen Block hergestellt ist.

Weiterhin lässt sich eine Reparatur auf einfache Weise durchführen, da ein zu reparierender Bereich herausgeschnitten werden kann und ein Austauschbereich durch einfache Weise über ein oder mehrere Rotorelemente definiert werden kann und damit über ein oder mehrere Rotorelemente hergestellt werden kann.

Ein Rotorelement weist einen oder mehrere Verstärkungsbereiche auf. Es lassen sich dadurch besonders belastete Bereiche gezielt verstärken. Beispielsweise lässt sich in radialer Richtung die Verbindung eines Schaufelblattbereichs mit einem Nabenbereich über einen Verstärkungsbereich zusätzlich verstärken, um das Abbrechen eines Schaufelblatts zu erschweren.

Es ist vorgesehen, dass ein Verstärkungsbereich sich von einem Schaufelblattbereich in einen Nabenbereich erstreckt. Dadurch lässt sich die Verbindung von Schaufelblättern mit der Nabe verstärken.

Es kann alternativ oder zusätzlich ein Verstärkungsbereich im Nabenbereich angeordnet sein, um die Nabe zu verstärken.

Insbesondere erstrecken sich Rotorelemente zwischen einer ersten Ebene und einer zweiten Ebene. Diese Ebenen bilden Begrenzungsflächen für die Rotorelemente und definieren dadurch eine ebene Oberseite und eine ebene Unterseite. Ein Rotorelement kann Bereiche aufweisen, welche gegenüber der ersten und/oder zweiten Ebene zurückgesetzt sind. Die einzelnen Rotorelemente lassen sich auf einfache Weise beispielsweise aus einer Platte herstellen. Die einzelnen Rotorelemente weisen selber mindestens teilweise ebene Oberflächen auf. Dadurch lässt sich auf einfache Weise eine Verbindung zwischen benachbarten Rotorelementen herstellen. Weiterhin lässt sich dadurch eine Verbindungsfläche realisieren, welche senkrecht zu der Axialrichtung angeordnet ist. Ein dadurch realisierter Verbindungsbereich in einem Stapelverbund des Rotors ist geringen Belastungen ausgesetzt.

Insbesondere sind die erste Ebene und die zweite Ebene parallel zueinander. Dadurch lässt sich eine strenge Ausrichtung der Rotorelemente senkrecht zur Axialrichtung erreichen.

Günstig ist es, wenn die erste Ebene senkrecht zur Axialrichtung liegt. Dadurch sind die Kraftbelastungen des Verbindungsbereichs zwischen benachbarten Rotorelementen gering.

Aus dem gleichen Grund ist es günstig, wenn die zweite Ebene senkrecht zur Axialrichtung liegt.

Insbesondere ist der Abstand zwischen der ersten Ebene und der zweiten Ebene kleiner als der Radius der Nabe. Die Rotorelemente lassen sich dann auf einfache Weise aus Platten herstellen, wobei sich auf einfache Weise eine entsprechende dreidimensionale Formung der Schaufelblätter erreichen lässt.

Insbesondere werden die Rotorelemente getrennt hergestellt, d. h. einzelne Rotorelemente werden individuell hergestellt. Durch die Fügung ergeben sich dann die Nabe und die Schaufelblätter mit ihrer speziellen geometrischen Form.

Ganz besonders vorteilhaft ist es, wenn ein Nabenbereich und Schaufelblattbereiche eines Rotorelements einstückig miteinander verbunden sind. Dadurch lässt sich bezogen auf ein Rotorelement eine hohe Festigkeit erreichen. Der Kraftfluss innerhalb eines Rotorelements wird nicht unterbrochen.

Günstig ist es, wenn die Nabe durch eine Reihe von in Axialrichtung aufeinanderfolgenden Nabenbereichen gebildet ist. Mit dem Stapelverbund der Rotorelement wird die Nabe geformt.

Günstigerweise ist ein Schaufelblatt durch eine Reihe von in Axialrichtung aufeinanderfolgenden Schaufelblattbereichen gebildet. Die dreidimensionale Ausformung eines Schaufelblatts wird durch Anordnung und Ausbildung von Schaufelblattbereichen an den entsprechenden Rotorelementen gebildet.

Es ist vorgesehen, dass die Rotorelemente mindestens bezüglich eines Grundkörpers aus einem metallischen Material hergestellt sind. Ein solches metallisches Material wie beispielsweise Titan weist die erforderliche Festigkeit auf und lässt sich auf einfache Weise bearbeiten. Ein Rotorelement muss bezüglich des Materials nicht unbedingt homogen ausgebildet sein. Es kann dabei zusätzlich vorgesehen sein, dass eine Verstärkung des metallischen Materials durch ein faserverstärktes Material wie beispielsweise TMC (Titan Matrix Composite) erfolgt. Die Fasern bestehen beispielsweise aus SiC.

Es ist grundsätzlich auch denkbar, dass ein Rotorelement insbesondere vollständig aus einem Faserverbundwerkstoff hergestellt ist.

Günstig ist es, wenn in einem Verstärkungsbereich ein faserverstärktes Material angeordnet ist. Durch die Faserorientierung insbesondere von Langfasern oder Endlosfasern lässt sich eine gezielte Verstärkung in bestimmten Richtungen erreichen, um die Festigkeit in bestimmten Richtungen zu erhöhen. Ein Verstärkungsbereich ist beispielsweise als Inlet ausgebildet, bei dem in einer Ausnehmung des Rotorelements ein Verstärkungsmaterial angeordnet ist.

Beispielsweise ist ein Verstärkungsbereich in einem Schaufelblattbereich angeordnet, um eine Verstärkung in den Schaufelblättern zu erreichen.

Beispielsweise umgibt ein Verstärkungsbereich die Axialrichtung. Durch Fasern wird die Axialrichtung gewissermaßen umwickelt. Dadurch lässt sich eine Umfangsverstärkung der Nabe erreichen.

Ganz besonders vorteilhaft ist es, wenn benachbarte Rotorelemente flächig miteinander verbunden sind. Dadurch lässt sich eine feste Fügeverbindung der Rotorelemente in dem Rotor erreichen.

Günstig ist es, wenn benachbarte Rotorelemente durch Lötung oder durch Schweißung (beispielsweise Diffusionsschweißung) oder adhäsiv miteinander verbunden sind. Insbesondere wenn die Rotorelemente aus einem metallischen Material hergestellt sind, lässt sich auf einfache Weise eine Verbindung beispielsweise über Lötung erreichen. Diese Lötverbindung lässt sich beispielsweise dadurch herstellen, dass Lot auf eine Verbindungsfläche aufgetragen wird und Rotorelemente in einem Stapelverbund in einen Ofen gegeben werden.

Insbesondere ist eine Verbindungsfläche für die Verbindung benachbarter Rotorelemente senkrecht zur Axialrichtung orientiert. Über solche Verbindungsflächen (die vorzugsweise eben sind) ist der Kraftfluss (parallel zur Axialrichtung) relativ gering, so dass sich eine hohe Festigkeit in dem Stapelverbund erreichen lässt.

Es kann vorgesehen sein, dass ein Rotorelement mindestens eine Ausnehmung aufweist. Eine solche Ausnehmung lässt sich auf einfache Weise an einem Rotorelement herstellen. Über eine Ausnehmung oder eine Mehrzahl von Ausnehmungen lassen sich beispielsweise Hohlräume in dem Rotor ausbilden, die bei aus dem Stand der Technik bekannten Rotoren so nicht herstellbar sind. Durch solche Hohlräume lässt sich die Masse verringern und eine definierte Massenverteilung einstellen. Beispielsweise können solche hergestellten Hohlräume auch dann genutzt werden, ein definiertes Dämpfungsverhalten einzustellen, insbesondere wenn in Hohlräumen ein entsprechendes dämpfungsbeeinflussendes Material gelagert wird. Ausnehmungen können auch so fluchtend zueinander angeordnet sein, dass Kanäle innerhalb des Rotors ausgebildet sind. Die Kanäle können in der Nabe oder in Schaufelblättern angeordnet sein, um beispielsweise eine Absaugung oder eine Ausblasung zu ermöglichen.

Günstigerweise ist eine Stapelverbindung einer Mehrzahl von in Axialrichtung aufeinanderfolgenden Rotorelementen vorgesehen, durch welche der Rotor gebildet ist.

Der Erfindung liegt ferner die Aufgabe zugrunde, ein Verfahren zur Herstellung eines Rotors der eingangs genannten Art mit optimierter Naben-Schaufelblatt-Verbindung bereitzustellen.

Diese Aufgabe wird erfindungsgemäß dadurch gelöst, dass ein Rotorelement mit einem oder mehreren Verstärkungsbereichen versehen wird, welche sich von einem Schaufelblattbereich in einen Nabenbereich erstrecken.

Durch die erfindungsgemäße Lösung lässt sich ein monolithischer Rotor herstellen, welcher nicht aus einem monolithischen Block herausgefräst werden muss.

Weitere Vorteile des erfindungsgemäßen Verfahrens wurden bereits im Zusammenhang mit dem erfindungsgemäßen Rotor erläutert.

Weitere vorteilhafte Ausgestaltungen des erfindungsgemäßen Verfahrens wurden ebenfalls bereits im Zusammenhang mit dem erfindungsgemäßen Rotor erläutert.

Insbesondere werden benachbarte Rotorelemente miteinander verbunden. Dadurch lässt sich ein Stapelverbund herstellen.

Rotorelemente lassen sich durch Lötung, Schweißung (beispielsweise Diffusionsschweißung) oder adhäsiv miteinander verbinden. Insbesondere wenn die Rotorelemente aus einem metallischen Material hergestellt sind, lässt sich eine Verbindung auf einfache Weise durch Lötung erreichen.

Günstig ist es, wenn Rotorelemente flächig miteinander verbunden werden. Dadurch lässt sich ein sicherer Stapelverbund zur Bildung eines monolithischen Rotors herstellen.

Günstigerweise werden Schaufelblattbereiche an den jeweiligen Rotorelementen individuell geformt. Durch die Kombination von entsprechenden Schaufelblattbereichen lassen sich Schaufelblätter in ihrer 3D-Ausformung herstellen.

Besonders vorteilhaft ist es, wenn der Nabenbereich und die Schaufelblattbereiche eines Rotors einstückig miteinander verbunden hergestellt werden. Beispielsweise wird das entsprechende Rotorelement durch bekannte Metallbearbeitungsverfahren aus einer Metallplatte hergestellt. Dadurch ist ein nicht unterbrochener Kraftfluss zwischen dem Nabenbereich und den Schaufelblattbereichen und dadurch beim hergestellten Rotor zwischen der Nabe und den Schaufelblättern senkrecht zur Rotordrehachse sichergestellt. Auch die Herstellung ist vereinfacht.

Es kann vorgesehen sein, dass an einem Rotorelement eine oder mehrere Ausnehmungen hergestellt werden. Diese können beispielsweise dazu dienen, ein faserverstärktes Material zur Herstellung von Verstärkungsbereichen aufzunehmen. Über Ausnehmungen lassen sich auch Hohlräume oder Kanäle ausbilden.

Ein Rotorelement wird mit einem oder mehreren Verstärkungsbereichen versehen. Durch das Versehen mit Verstärkungsbereichen wird die Verbindungsmöglichkeit benachbarter Rotorelemente nicht wesentlich beeinträchtigt. Die Verstärkungsbereiche lassen sich gezielt an den relevanten Stellen anordnen.

Um glatte Übergänge zu erreichen, ist es vorteilhaft, wenn eine Endkonturbearbeitung an einem Stapelverbund oder Schichtverbund von Rotorelementen erfolgt. Beispielsweise handelt es sich um eine Schlichtbearbeitung.

Der Erfindung liegt ferner die Aufgabe zugrunde, ein Reparaturverfahren der eingangs genannten Art bereitzustellen, welches sich auf einfache Weise durchführen lässt.

Diese Aufgabe wird erfindungsgemäß dadurch gelöst, dass ein Reparaturbereich des Rotors mit einer Schnittebene senkrecht zur Axialrichtung herausgeschnitten wird und ein Austauschbereich durch ein oder mehrere Rotorelemente hergestellt wird.

Bei dem genannten Rotor lässt sich auf einfache Weise eine Reparatur durchführen, da der Rotor durch einen Stapelverbund von in Axialrichtung aufeinanderfolgenden Rotorelementen gebildet ist. Ein entsprechender Reparaturbereich lässt sich dadurch auf einfache Weise entfernen und ein entsprechender Austauschbereich lässt sich auf einfache Weise über Rotorelemente ausbilden.

Insbesondere erfolgt ein Schnitt an einem Übergangsbereich zwischen benachbarten Rotorelementen. Dadurch lässt sich der Austausch auf einfache Weise durchführen, da der Austauschbereich dann ein ganzzahliges (einschließlich Eins) Vielfaches der Dicke von Rotorelementen ist.

Beispielsweise wird ein Reparaturbereich über Drahterosion herausgeschnitten. Durch Drahterosion lässt sich ein Reparaturbereich mit einer definierten Schnittebene heraustrennen.

Die nachfolgende Beschreibung bevorzugter Ausführungsformen dient im Zusammenhang mit der Zeichnung der näheren Erläuterung der Erfindung. Es zeigen:
- Figur 1: eine perspektivische Darstellung eines Ausführungsbeispiels eines erfindungsgemäßen Rotors;
- Figur 2: eine Explosionsdarstellung des Rotors gemäß Figur 1 (entsprechend einer Veranschaulichung eines Zwischenschritts bei dem Herstellungsverfahren des Rotors gemäß Figur 1);
- Figur 3: ein erstes Ausführungsbeispiel eines Rotorelements; und
- Figur 4: ein zweites Ausführungsbeispiel eines Rotorelements.

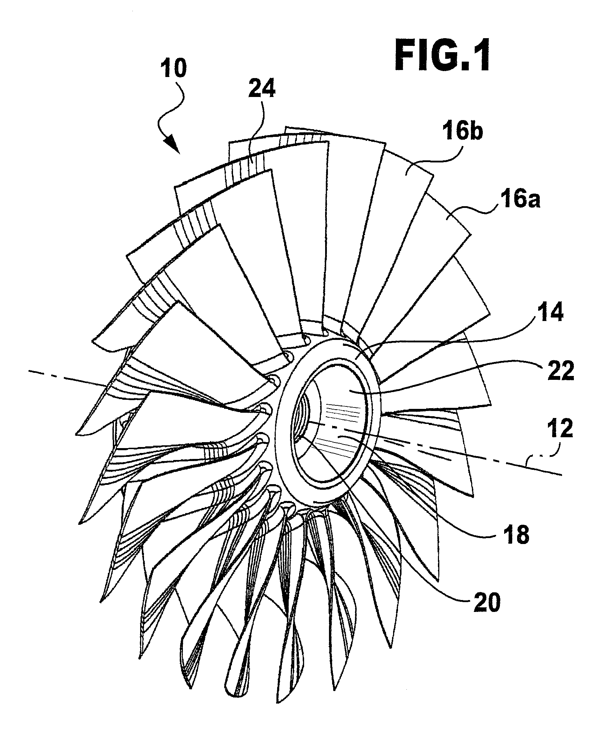

Ein Ausführungsbeispiel eines erfindungsgemäßen Rotors, welches in Figur 1 gezeigt und dort mit 10 bezeichnet ist, erstreckt sich parallel zu einer Axialachse 12, welche mit einer Rotordrehachse zusammenfällt. Der Rotor 10 weist eine Nabe 14 und an der Nabe 14 angeordnete Schaufelblätter 16a, 16b usw. auf.

Die Nabe weist bei dem gezeigten Ausführungsbeispiel einen Innenraum 18 auf, mittels dem sich der Rotor 10 auf eine Welle (in der Zeichnung nicht gezeigt) aufsetzen lässt. Beispielsweise umfasst der Innenraum 18 einen ersten hohlzylindrischen Bereich 20, durch den die Welle durchführbar ist. Ein zweiter hohlzylindrischer Bereich 22 folgt auf den ersten Bereich 20 und hat einen größeren Durchmesser als der erste Bereich 20. Über diesen zweiten Bereich 22 lässt sich beispielsweise eine Fixierung des Rotors 10 an der Welle erreichen.

Die Ausbildung und Anordnung der Schaufelblätter 16a, 16b usw. an der Nabe 14 sowie die Ausbildung der Nabe 14 hängt von der entsprechenden Anwendung ab.

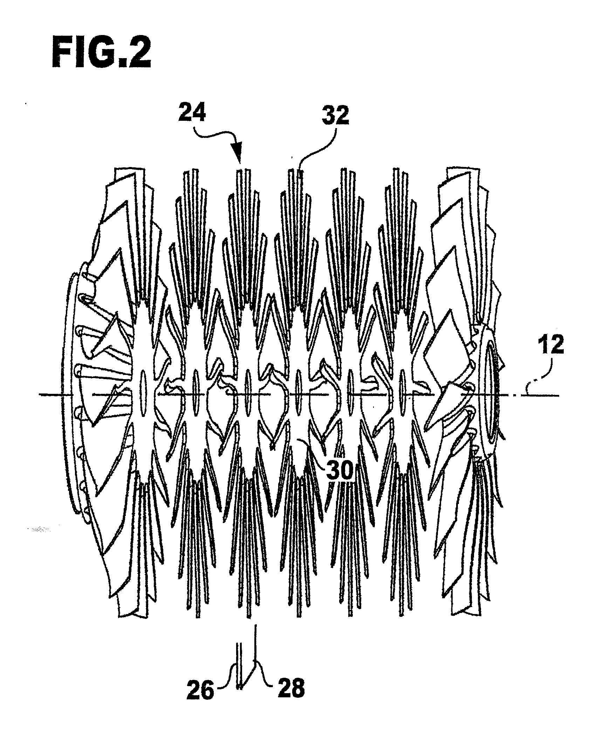

Der Rotor 10 ist durch einen Stapelverbund einer Mehrzahl von Rotorelementen 24 gebildet (Figur 2).

Ein Rotorelement 24 erstreckt sich zwischen einer ersten
(Begrenzungs-)Ebene 26 und einer zweiten (Begrenzungs-)Ebene 28. Der Abstand dieser beiden Ebenen 26 und 28 entspricht der Dicke eines Rotorelements 24, wobei die beiden Ebenen 26 und 28 parallel zueinander ausgerichtet sind. Es kann vorgesehen sein, dass alle Rotorelemente 24 die gleiche Dicke (den gleichen Abstand zwischen den Ebenen 26 und 28) aufweisen. Es ist aber auch möglich, dass unterschiedliche Rotorelemente 24 unterschiedliche Dicken aufweisen.

Die erste Ebene 26 und die zweite Ebene 28 liegen jeweils senkrecht zur Axialachse 12.

Ein Rotorelement 24 umfasst typischerweise einen Nabenbereich 30 und Schaufelblattbereiche 32. Es kann auch Rotorelemente geben, und zwar insbesondere äußere Rotorelemente, welche nur einen Nabenbereich und keine Schaufelblattbereiche aufweisen (zur Bildung eines überstehenden Nabenteils).

Die Nabenbereiche 30 und die Schaufelblattbereiche 32 sind einstückig miteinander verbunden.

Ein Rotorelement 24 ist mindestens bezüglich seines Grundkörpers (siehe unten) vorzugsweise aus einem metallischen Material wie beispielsweise Titan hergestellt.

Die Nabenbereiche 30 und Schaufelblattbereiche 32 benachbarter Rotorelemente 24 sind angepasst aneinander ausgebildet, so dass sich durch einen Stapelverbund aller Rotorelemente 24 die Nabe 14 und die Schaufelblätter 16a, 16b usw. ergeben.

Benachbarte Rotorelemente 24 sind beispielsweise über Lötung flächig miteinander verbunden. Durch die erste Ebene 26 und die zweite Ebene 28 wird ein entsprechend großer Flächenbereich zu dieser flächigen Verbindung bereitgestellt.

Der Rotor 10 ist somit durch eine "Stapelung" aller Rotorelemente 24, welche in der Axialrichtung 12 aufeinanderfolgen, gebildet.

Die Rotorelemente 24 lassen sich getrennt individuell herstellen.

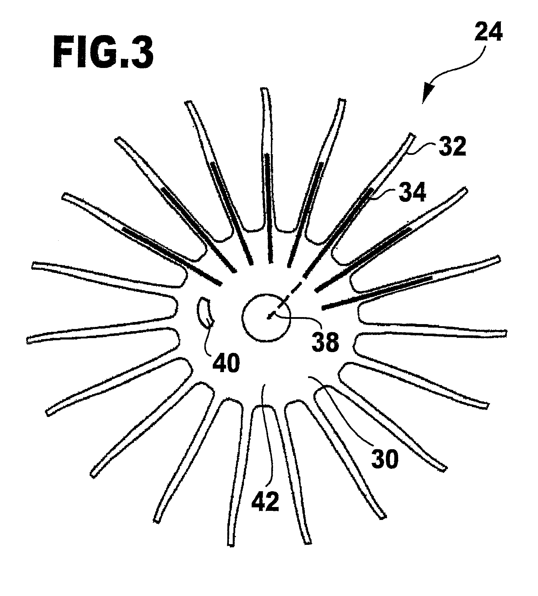

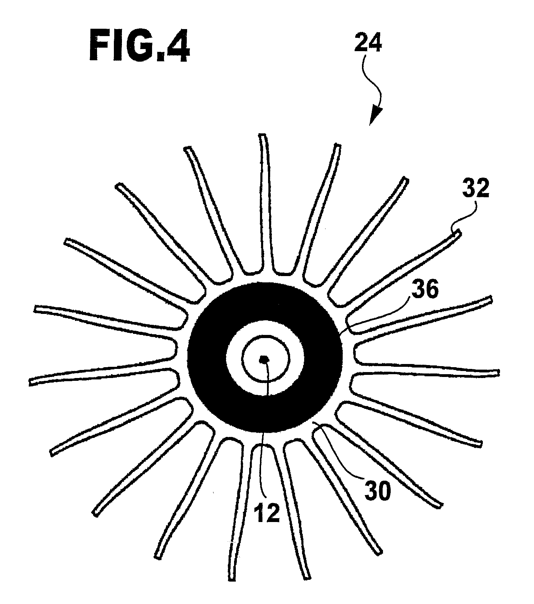

Es können an jedem oder an ausgewählten Rotorelementen 24, wie in den Figuren 3 und 4 beispielhaft gezeigt, Verstärkungsbereiche 34 (Figur 3), 36 (Figur 4) vorgesehen sein. In einem solchen Verstärkungsbereich ist bevorzugterweise ein faserverstärktes Material angeordnet. Beispielsweise handelt es sich um ein faserverstärktes Titanmaterial (TMC). Die Fasern sind dabei in einer solchen Orientierung angeordnet, dass eine gezielte Verstärkung erreicht wird.

Beispielsweise sind Verstärkungsbereiche 34 vorgesehen, welche zwischen den Schaufelblattbereichen 32 und dem Nabenbereich 30 verlaufen und dabei sowohl in dem Nabenbereich 30 als auch in dem Schaufelblattbereich 32 liegen. Ein solcher Verstärkungsbereich 34 lässt sich beispielsweise dadurch ausbilden, dass eine Ausnehmung an einem Rotorelement 24 hergestellt wird, in welchem dann das faserverstärkte Material positioniert wird. Fasern sind dabei vorzugsweise in Radialrichtung 38 senkrecht zur Axialachse 12 angeordnet.

Bei dem in Figur 4 gezeigten Ausführungsbeispiel eines Rotorelements dient der Verstärkungsbereich 36 zur Verstärkung des Nabenbereichs 30. Er umfasst ein faserverstärktes Material, welches die Axialachse 12 in dem Nabenbereich 30 umgibt. Fasern in dem Verstärkungsbereich 36 liegen kreisförmig um diese Axialachse 12 in dem Nabenbereich 30.

Es kann vorgesehen sein, dass in den Rotorelementen 24 eine oder mehrere Ausnehmungen 40 hergestellt werden. Beispielsweise dient eine solche Ausnehmung 40 dazu, in dem hergestellten Rotor 10 einen Hohlraum bereitzustellen. Durch das Vorsehen von Hohlräumen lässt sich die Masse des Rotors 10 reduzieren.

Es ist auch möglich, dass Ausnehmungen 40 benachbarter Rotorelemente 24 fluchtend miteinander ausgerichtet werden, um einen oder mehrere Kanäle in dem Rotor 10 bereitzustellen. Es ist dabei sogar grundsätzlich möglich, dass Kanäle innerhalb von Schaufelblättern 16a, 16b hergestellt werden. Über solche Kanäle kann beispielsweise eine Ausblasung oder eine Absaugung an einem Schaufelblatt 16a, 16b und/oder an der Nabe 14 erfolgt.

### Der Rotor 10 wird wie folgt hergestellt:

Die Rotorelemente 24 werden individuell getrennt hergestellt. Beispielsweise werden sie aus Metallplatten einer bestimmten Dicke (wodurch dann die erste Ebene 26 und die zweite Ebene 28 definiert sind) durch übliche Metallbearbeitungsverfahren herausgearbeitet. Die Formgebung eines entsprechenden Rotorelements 24 erfolgt dabei derart, dass sich durch die Zusammensetzung aller Rotorelemente in dem Stapelverbund 24 die Nabe 14 und die Schaufelblätter 16a, 16b in einer definierten Form ergeben.

Bei der Herstellung des Rotorelements 24 werden die Schaufelblätterbereiche 32 und der Nabenbereich 30 mit einer einstückigen Verbindung hergestellt.

Die Rotorelemente 24 weisen, wie oben erwähnt, Begrenzungsflächen, die erste Ebene 26 und die zweite Ebene 28, auf. Dadurch ist eine ebene Verbindungsfläche 42 (Figur 3) zur Verbindung mit einem benachbarten Rotorelement 24 bereitgestellt. Es lässt sich dann eine flächige Verbindung erreichen.

Nach der Herstellung der individuellen Rotorelemente 24 werden diese zu einem Stapelverbund verbunden. Benachbarte Rotorelemente 24 können beispielsweise durch Schweißung oder adhäsiv miteinander verbunden werden.

Bei einer vorteilhaften Ausführungsform werden benachbarte Rotorelemente 24 durch Lötung miteinander verbunden. Dazu werden die entsprechenden Verbindungsflächen 42 mit Lot versehen und es erfolgt eine Lötverbindungsherstellung in einem Ofen.

Der entsprechende Stapelverbund wird mechanisch bearbeitet, beispielsweise durch Schlichtung, um die Endkontur herzustellen. Dadurch lassen sich insbesondere Übergänge zwischen benachbarten Rotorelementen glätten.

An den einzelnen Rotorelementen 24 können vor der Herstellung des Stapelverbundes Verstärkungsbereiche 34 bzw. 36 hergestellt werden, indem in entsprechende Ausnehmungen, welche beispielsweise durch spanabhebende Materialverarbeitung hergestellt werden, ein entsprechendes Faserverbundmaterial positioniert wird.

Ebenso können Ausnehmungen 40 beispielsweise zur Hohlraumherstellung oder zur Herstellung von Kanälen hergestellt werden.

Bei dem Rotor 10 sind benachbarte Rotorelemente 24 über Verbindungsflächen 42 verbunden, welche senkrecht zur Axialachse 12 liegen. Die Fügung erfolgt also auf einer Fläche senkrecht zur Axialrichtung 12 und nicht über Flächen mit radialer Normalenrichtung bzw. Normalenrichtung, welche in einer Umfangsrichtung liegt. Senkrecht zu der Axialachse 12 sind die Belastungen bei der Rotation des Rotors 10 relativ gering. Durch den Stapelverbund lässt sich daher ein hohes Festigkeitspotential bei einfacher Herstellbarkeit erreichen.

Durch den Stapelverbund der Rotorelemente 24 lässt sich ein monolithischer Rotor 10 in einer Schichtbauweise herstellen. Es lassen sich Hohlräume (über Ausnehmungen 40 in den einzelnen Rotorelementen 24) an frei wählbaren Positionen einbringen. Dadurch kann ein Rotor 10 mit geringerer Masse hergestellt werden. Weiterhin lassen sich die Fädelungsmöglichkeiten für die Schaufelblätter 16a, 16b usw. verbessern, ohne dass es zu erhöhten Lasten kommen kann.

Weiterhin lassen sich gezielt Verstärkungsbereiche herstellen, um eine Verstärkung für besonders belastete Richtungen bereitzustellen. Beispielsweise lässt sich über die Verstärkungsbereiche 34 eine radiale Verstärkung erreichen. Über die Verstärkungsbereiche 36 lässt sich die Nabe 14 verstärken.

Es ist möglich, in dem Rotor 10 gezielt Kanäle beispielsweise in der Nabe 14 und/oder in den Schaufelblättern 16a, 16b anzuordnen.

Ein Rotor 10 mit Beschädigungen lässt sich auf einfache Weise reparieren. Der beschädigte Bereich wird dazu mit Schnitten parallel zu Verbindungsflächen 42 (d. h. senkrecht zur Axialrichtung 12) herausgeschnitten. Dies kann beispielsweise über Drahterodieren erfolgen. Der Ersatzbereich wird dann durch Anfügung eines oder mehrerer Rotorelemente 24 (in angepasster Form) an den Restbereich (nach Herausschneiden des Reparaturbereichs) entsprechend dem Verfahren bei der Herstellung des Rotors 10 gefügt. Es lassen sich definiert Rotorebenen mit Normalenrichtung parallel zur Axialachse 12 austauschen.

Das Problem der Anbindung von Schaufelblättern 16a, 16b an die Nabe 14 ist verringert, da die Schaufelblattbereiche 32 einstückig an dem Nabenbereich 30 für jedes Rotorelement 24 ausbildbar sind. Innerhalb eines Rotorelements 24 ist der Kraftfluss nicht unterbrochen. Der Kraftfluss zwischen benachbarten Rotorelementen 24 (welcher parallel zur Axialachse 12 verläuft) ist dagegen so gering, dass nicht erwartet wird, dass die Betriebsfestigkeit sich verschlechtert.

Der Rotor 10 lässt sich beispielsweise für ein Verdichterlaufrad oder ein Turbinenlaufrad eines Triebwerks wie beispielsweise eines Flugkörpertriebwerks einsetzen.

## Patentansprüche

1. Rotor mit einer Nabe (14) und an der Nabe (14) angeordneten Schaufelblättern (16a, 16b), welcher sich in einer Axialrichtung (12) erstreckt, wobei die Axialrichtung (12) koaxial zu einer Rotordrehachse ist, und welcher durch eine Zusammensetzung aus in Axialrichtung (12) aufeinanderfolgenden Rotorelementen (24) gebildet ist, wobei benachbarte Rotorelemente (24) miteinander verbunden sind und die Rotorelemente (24) einen Nabenbereich (30) oder einen Nabenbereich (30) und Schaufelblattbereiche (32) aufweisen und die Kombination der Nabenbereiche (30) und Schaufelblattbereiche (32) der Rotorelemente (24) die Nabe (14) und die Schaufelblätter (16a, 16b) bilden,
**dadurch gekennzeichnet , dass**einRotorelement(24) einen oder mehrere Verstärkungsbereiche (34; 36) aufweist und dass ein Verstärkungsbereich (34; 36) sich von einem Schaufelblattbereich (32) in einen Nabenbereich (30) erstreckt und/oder im Nabenbereich (30) angeordnet ist.

2. Rotor nach Anspruch 1, **dadurch gekennzeichnet, dass** sich Rotorelemente (24) zwischen einer ersten Ebene (26) und einer zweiten Ebene (28) erstrecken.

3. Rotor nach Anspruch 2, **dadurch gekennzeichnet, dass** die erste Ebene (26) und die zweite Ebene (28) parallel zueinander sind.

4. Rotor nach Anspruch 2 oder 3, **dadurch gekennzeichnet, dass** die erste Ebene (26) senkrecht zur Axialrichtung (12) liegt.

5. Rotor nach einem der Ansprüche 2 bis 4, **dadurch gekennzeichnet, dass** die zweite Ebene (28) senkrecht zur Axialrichtung (12) liegt.

6. Rotor nach einem der Ansprüche 2 bis 5, **dadurch gekennzeichnet, dass** der Abstand zwischen der ersten Ebene (26) und der zweiten Ebene (28) kleiner ist als der Radius der Nabe (14).

7. Rotor nach einem der vorangehenden Ansprüche, **dadurch gekennzeichnet, dass** die Rotorelemente (24) getrennt hergestellt sind.

8. Rotor nach einem der vorangehenden Ansprüche, **dadurch gekennzeichnet, dass** ein Nabenbereich (30) und Schaufelblattbereiche (32) einstückig miteinander verbunden sind.

9. Rotor nach einem der vorangehenden Ansprüche, **dadurch gekennzeichnet, dass** die Nabe (14) durch eine Reihe von in Axialrichtung aufeinanderfolgenden Nabenbereichen (30) gebildet ist.

10. Rotor nach einem der vorangehenden Ansprüche, **dadurch gekennzeichnet, dass** ein Schaufelblatt (16) durch eine Reihe von in Axialrichtung (12) aufeinanderfolgenden Schaufelblattbereichen (32) gebildet ist.

11. Rotor nach einem der vorangehenden Ansprüche, **dadurch gekennzeichnet, dass** die Rotorelemente (24) mindestens bezüglich eines Grundkörpers aus einem metallischen Material hergestellt sind.

12. Rotor nach einem der vorangehenden Ansprüche, **dadurch gekennzeichnet, dass** in einem Verstärkungsbereich (34; 36) ein faserverstärktes Material angeordnet ist.

13. Rotor nach einem der vorangehenden Ansprüche, **dadurch gekennzeichnet, dass** ein Verstärkungsbereich in einem Schaufelblattbereich (32) angeordnet ist.

14. Rotor nach einem der vorangehenden Ansprüche, **dadurch gekennzeichnet, dass** ein Verstärkungsbereich (34) die Axialachse (12) umgibt.

15. Rotor nach einem der vorangehenden Ansprüche, **dadurch gekennzeichnet, dass** benachbarte Rotorelemente (24) flächig miteinander verbunden sind.

16. Rotor nach einem der vorangehenden Ansprüche, **dadurch gekennzeichnet, dass** benachbarte Rotorelemente (24) durch Lötung oder durch Schweißung adhäsiv miteinander verbunden sind.

17. Rotor nach einem der vorangehenden Ansprüche, **dadurch gekennzeichnet, dass** eine Verbindungsfläche (42) für die Verbindung benachbarter Rotorelemente (24) senkrecht zur Axialrichtung (12) orientiert ist.

18. Rotor nach Anspruch 17, **dadurch gekennzeichnet, dass** die Verbindungsfläche (42) eben ist.

19. Rotor nach einem der vorangehenden Ansprüche, **dadurch gekennzeichnet, dass** ein Rotorelement (24) mindestens eine Ausnehmung (40) aufweist.

20. Rotor nach einem der vorangehenden Ansprüche, **dadurch gekennzeichnet, dass** ein oder mehrere Hohlräume vorgesehen sind.

21. Rotor nach einem der vorangehenden Ansprüche, **dadurch gekennzeichnet, dass** ein oder mehrere Kanäle vorgesehen sind.

22. Rotor nach einem der vorangehenden Ansprüche, **gekennzeichnet durch** einen Stapelverbund einer Mehrzahl von in Axialrichtung (12) aufeinanderfolgender Rotorelemente (24).

23. Verfahren zur Herstellung eines Rotors, bei dem getrennte Rotorelemente mit einem Nabenbereich oder einem Nabenbereich und Schaufelblattbereichen hergestellt werden und die Rotorelemente in einer Axialrichtung zu einem Stapelverbund gefügt werden, **dadurch gekennzeichnet, dass** ein Rotorelement mit einem oder mehreren Verstärkungsbereichen versehen wird, welche sich von einem Schaufelblattbereich in einen Nabenbereich erstrecken und/oder im Nabenbereich angeordnet sind.

24. Verfahren nach Anspruch 23, **dadurch gekennzeichnet, dass** benachbarte Rotorelemente miteinander verbunden werden.

25. Verfahren nach Anspruch 23 oder 24, **dadurch gekennzeichnet, dass** Rotorelemente durch Lötung, Schweißung oder adhäsiv miteinander verbunden werden.

26. Verfahren nach einem der Ansprüche 23 bis 25, **dadurch gekennzeichnet, dass** Rotorelemente flächig miteinander verbunden werden.

27. Verfahren nach einem der Ansprüche 23 bis 26, **dadurch gekennzeichnet, dass** Schaufelblattbereiche an den jeweiligen Rotorelementen individuell geformt werden.

28. Verfahren nach einem der Ansprüche 23 bis 27, **dadurch gekennzeichnet, dass** der Nabenbereich und die Schaufelblattbereiche eines Rotorelements einstückig miteinander verbunden hergestellt werden.

29. Verfahren nach einem der Ansprüche 23 bis 28, **dadurch gekennzeichnet, dass** an einem Rotorelement eine oder mehrere Ausnehmungen hergestellt werden.

30. Verfahren nach einem der Ansprüche 23 bis 29, **dadurch gekennzeichnet, dass** eine Endkonturbearbeitung an einem Stapelverbund von Rotorelementen erfolgt.

31. Verfahren zur Reparatur eines Rotors mit einer Nabe und an der Nabe angeordneten Schaufelblättern, welcher sich in einer Axialrichtung erstreckt, wobei die Axialrichtung koaxial zu einer Rotordrehachse ist, und der Rotor aus in Axialrichtung aufeinanderfolgenden Rotorelementen zusammengesetzt ist, wobei benachbarte Rotorelemente miteinander verbunden sind und die Rotorelemente einen Nabenbereich oder einen Nabenbereich und Schaufelblattbereiche aufweisen und die Kombination der Nabenbereiche und Schaufelblattbereiche der Rotorelemente die Nabe und die Schaufelblätter bilden, bei dem ein Reparaturbereich des Rotors mit einer Schnittebene senkrecht zur Axialrichtung ausgeschnitten wird und ein Austauschbereich durch ein oder mehrere Rotorelemente hergestellt wird.

32. Verfahren nach Anspruch 31, **dadurch gekennzeichnet, dass** ein Schnitt an einem Übergangsbereich zwischen benachbarten Rotorelementen eingebracht wird.

33. Verfahren nach Anspruch 31 oder 32, **dadurch gekennzeichnet, dass** ein Reparaturbereich über Drahterodieren herausgeschnitten wird.
